# EUROPÄISCHE PATENTANMELDUNG

(11) **EP 1 657 858 A1**
(43) Veröffentlichungstag der Anmeldung: **17.05.2006**
(21) Anmeldenummer: 04026908.6
(22) Anmeldetag: 12.11.2004
(51) Int. Cl.: H04L 12/56

(54) **Verfahren zum Festlegen einer steuernden Basisstation für eine Übertragung in Aufwärtsrichtung von Datenpaketen einer Teilnehmerstation eines Funkkommunikationsystems sowie Vorrichtung zum Festlegen der steuernden Basisstation**

(71) Anmelder: SIEMENS AKTIENGESELLSCHAFT, 80333 München (DE)
(72) Erfinder: Gartner, Beate, 2542 Kottingbrunn (AT); Kroth, Norbert, 14471 Potsdam (DE); Ulrich, Thomas, 67098 Bad Dürkheim (DE); Unteregger, Burghard, 1040 Wien (AT)

(57) **Zusammenfassung**

Bei einem Verfahren zum Festlegen einer steuernden Basisstation für eine Übertragung in Aufwärtsrichtung von Datenpaketen (DP) einer Teilnehmerstation (UE) eines Funkkommunikationssystems, in dem eine Vorrichtung (SRNC) von wenigstens zwei Basisstationen (NodeB1, NodeB2, NodeB3) Datenpakete (D1, D2, D3) empfängt, welche die wenigstens zwei Basisstationen (NodeB1, NodeB2, NodeB3) von der Teilnehmerstation (UE) in jeweils wenigstens zwei Funkzellen (B, C, D, E, F, G, H) in einem Empfangsdiversitätsbetrieb empfangen haben, und in dem bestimmte Übertragungsparameter (PR) für die Übertragung in Aufwärtsrichtung von Datenpaketen (DP) nur von der steuernden Basisstation der Teilnehmerstation (UE) signalisiert werden, wird erfindungsgemäß eine der Basisstationen (NodeB2) als steuernde Basisstation in Abhängigkeit von einem Maß eines Datendurchsatzes (R2) der durch die Vorrichtung (SRNC) von der entsprechenden Basisstation (NodeB2) empfangenen Datenpakete (D2) festgelegt.

## Beschreibung

Verfahren zum Festlegen einer steuernden Basisstation für eine Übertragung in Aufwärtsrichtung von Datenpaketen einer Teilnehmerstation eines Funkkommunikationssystems sowie Vorrichtung zum Festlegen der steuernden Basisstation

Die Erfindung betrifft ein Verfahren zum Festlegen einer steuernden Basisstation für eine Übertragung in Aufwärtsrichtung von Datenpaketen einer Teilnehmerstation eines Funkkommunikationssystems, sowie eine entsprechende Vorrichtung zum Festlegen der steuernden Basisstation.

Derzeit wird von dem 3rd Generation Partnership Project (3GPP) eine neuer Kanaltyp diskutiert, der so genannte "enhanced uplink" (siehe 3GPP 25.896v6.0.0 (2004-03) und 3GPP TS 25.309v6.0.0 (2004-09)). Hierbei handelt es sich um eine Erweiterung eines dedizierten Kanals (DCH: Dedicated Channel), den eine Teilnehmerstation in Aufwärtsrichtung (uplink oder auch reverse link), d.h. für Übertragungen an Basisstationen nutzen kann. Dieser erweiterte dedizierte Kanal wird als E-DCH (E-DCH: Enhanced-DCH) bezeichnet.

Es ist vorgesehen, dass jede Teilnehmerstation einen E-DCH verwenden kann. Ein E-DCH soll gemäß dem 3GPP zur Verbesserung der Funkabdeckung und des Datendurchsatzes in Aufwärtsrichtung dienen und Übertragungsverzögerungen reduzieren. Hierzu ist vorgesehen, die Scheduling-Funktionalität, die beispielsweise für bisher verwendete dedizierte Kanäle in einem steuernden Funknetzkontroller, dem so genannten Serving RNC (SRNC: Serving Radio Network Controller) angeordnet ist, für den "enhanced uplink" auf die Ebene der Basisstationen zu verlagern.

Bei der Scheduling-Funktionalität (engl. scheduling: Ablaufkoordination, Planung) handelt es sich um eine Steuerfunktionalität eines Funkkommunikationssystems, die den Ablauf der Übertragung beispielsweise in Aufwärtsrichtung regelt. Aufgabe der Scheduling-Funktionalität ist beispielsweise der Teilnehmerstation bestimmte Übertragungsparameter zu signalisieren. Diese bestimmten Übertragungsparameter sind beispielsweise ein Absolutwert einer zu verwendenden Sendeleistung und/oder ein zu verwendendes Transportformat, oder ein maximales Transportformat oder eine Liste von Transportformaten, aus denen die Teilnehmerstation ein Transportformat auswählen kann.

Befindet sich eine Teilnehmerstation, die Datenpakete auf einem E-DCH überträgt, in einem Softhandover, d.h. werden die auf dem E-DCH gesendeten Datenpakete von wenigstens zwei Basisstationen empfangen und beispielsweise an einen die Basisstationen steuernden Funknetzkontroller weitergeleitet, spricht man von einem Empfangsdiversitätsbetrieb der Übertragung (engl. receive diversity). Damit im Softhandover nicht unnötig Übertragungsressourcen in Abwärtsrichtung (downlink oder auch forward link) zum Durchführen des Scheduling verwendet werden und die Teilnehmerstation nicht möglicherweise widersprüchliche bestimmte Übertragungsparameter von unterschiedlichen Basisstationen empfängt, ist es sinnvoll und von dem 3GPP vorgesehen, dass während des Softhandovers nur eine der Basisstationen, die von der Teilnehmerstation Datenpakete empfangenden, als steuernde Basisstation (engl.: serving node B) die bestimmten Übertragungsparameter signalisiert, d.h. die Scheduling-Funktionalität übernimmt.

Der Erfindung liegt die Aufgabe zugrunde, ein vorteilhaftes Verfahren zum Festlegen einer steuernden Basisstation für eine Übertragung in Aufwärtsrichtung von Datenpaketen einer Teilnehmerstation eines Funkkommunikationssystems sowie eine entsprechende Vorrichtung anzugeben.

Diese Aufgabe wird mit dem Verfahren sowie der Vorrichtung gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Festlegen einer steuernden Basisstation für eine Übertragung in Aufwärtsrichtung von Datenpaketen einer Teilnehmerstation eines Funkkommunikationssystems, in dem eine Vorrichtung von wenigstens zwei Basisstationen Datenpakete empfängt, welche die wenigstens zwei Basisstationen von der Teilnehmerstation in jeweils wenigstens zwei Funkzellen in einem Empfangsdiversitätsbetrieb (z.B. während eines Softhandovers) empfangen haben, und in dem bestimmte Übertragungsparameter für die Übertragung in Aufwärtsrichtung von Datenpaketen nur von der steuernden Basisstation der Teilnehmerstation signalisiert werden, wird erfindungsgemäß eine der Basisstationen als steuernde Basisstation in Abhängigkeit von einem Maß eines Datendurchsatzes der durch die Vorrichtung von der entsprechenden Basisstation empfangenen Datenpakete festgelegt.

Auf diese Weise können die bestimmten Übertragungsparameter der Teilnehmerstation beispielsweise von derjenigen Basisstation signalisiert werden, die bereits vor ihrer Festlegung als steuernde Basisstation den größten Datendurchsatz (z.B. die größte Datenrate) hinsichtlich an die Vorrichtung weitergeleiteter Datenpakete aufweist. Die steuernde Basisstation kann dann die bestimmten Übertragungsparameter so Einstellen, dass die Teilnehmerstation einen gegenüber vor der Festlegung als steuernde Basisstation erhöhten Datendurchsatz in Aufwärtsrichtung erhält. Bei den bestimmten Übertragungsparametern handelt es sich insbesondere um Übertragungsparameter, die zur Durchführung der Übertragung unbedingt erforderlich sind. Beispielsweise sind die bestimmten Übertragungsparameter ein Absolutwert der zu verwendenden Sendeleistung und/oder ein Transportformat (TF: Transport Format) oder ein maximales Transportformat oder eine Liste von Transportformaten (TFCS: Transport Format Combination Set) zur Auswahl eines Transportformats durch die Teilnehmerstation.

Vorteilhafterweise wird als steuernde Basisstation eine der Basisstationen festgelegt, deren Maß des Datendurchsatzes einen vorbestimmten Grenzwert überschreitet. Auf diese Weise wird erreicht, dass eine Auswahl einer steuernden Basisstation nur unter einer begrenzten Anzahl von Basisstation durchgeführt wird.

Alternativ oder zusätzlich ist es von Vorteil, wenn diejenige der Basisstationen als steuernde Basisstation festgelegt wird, deren Maß des Datendurchsatzes den größten Wert aufweist.

Unter einem Maß eines Datendurchsatzes ist jede von der entsprechenden Basisstation oder der die Datenpakete empfangenden Vorrichtung ermittelbare Größe zu verstehen, anhand derer der Datendurchsatz, d.h. die Datenpakete, die pro Zeiteinheit die entsprechende Basisstation verlassen bzw. in der Vorrichtung eintreffen qualitativ oder quantitativ abgeschätzt werden kann.

Insbesondere ist es vorteilhaft, wenn als Maß des Datendurchsatzes eine Datenrate der von der Vorrichtung von der entsprechenden Basisstation empfangenen Datenpakete verwendet wird. Äquivalent hierzu ist ein Ermitteln der von der entsprechenden Basisstation an die Vorrichtung gesendeten Datenpakete, vorausgesetzt, die Übertragung erfolgt verlustfrei bzw. im wesentlichen verlustfrei.

In einer Weiterbildung der Erfindung ist vorteilhafterweise vorgesehen, dass wenigstens eine der Funkzellen der steuernden Basisstation als steuernde Funkzelle festgelegt wird, wobei die bestimmten Übertragungsparameter der Teilnehmerstation ausschließlich von der wenigstens einen steuernden Funkzelle signalisiert werden. Selbstverständlich können mehrere Funkzellen der steuernden Basisstation als steuernde Funkzellen festgelegt werden, um so die bestimmten Übertragungsparameter redundant übertragen zu können. Dadurch kann eine verbesserte Empfangssicherheit für die bestimmten Übertragungsparameter erreicht werden.

Weiterhin ist von Vorteil, wenn die wenigstens eine steuernde Funkzelle in Abhängigkeit eines Maßes einer funkzellenspezifischen Empfangsqualität der Teilnehmerstation und/oder der steuernden Basisstation festgelegt wird. Auf diese Weise kann diejenige der Funkzellen der steuernden Basisstation als steuernde Funkzelle festgelegt werden, die von der Teilnehmerstation am besten empfangen wird. Dies stellt für die bestimmten Übertragungsparameter den bestmöglichen Empfang durch die Teilnehmerstation sicher während gleichzeitig Funkressourcen in Abwärtsrichtung effektiv genutzt werden können. Wird diejenige Funkzelle als steuernde Funkzelle festgelegt, die von der steuernden Basisstation am besten empfangen wird, können von der Teilnehmerstation an das Funkkommunikationssystem gerichtete Signalisierungen bestmöglich empfangen werden. In diesem Zusammenhang ist hervorzuheben, dass in den meisten praxisrelevanten Situation bei einem guten Empfang durch die steuernde Basisstation auch der Empfang in der entsprechenden Funkzelle durch die Teilnehmerstation gut ist. Wird sowohl ein Maß der Empfangsqualität der Teilnehmerstation als auch der steuernden Basisstation berücksichtigt, ist eine Optimierung beider Empfangssituationen möglich.

Um insbesondere netzseitig Signalisierungszeiten zu reduzieren ist es von Vorteil, dass die Festlegung der steuernden Basisstation und/oder der wenigstens einen steuernden Funkzelle von der Vorrichtung durchgeführt wird.

Vorteilhafterweise handelt es sich bei der Vorrichtung um einen Funknetzkontroller, insbesondere einen für die Teilnehmerstation zuständigen steuernden Funknetzkontroller (serving RNC). Der steuernde Funknetzkontroller nimmt beispielsweise bereits eine Vielzahl von Steuerfunktionen für Verbindungen der Teilnehmerstation wahr und ist beispielsweise die letzte Einrichtung vor einem Kernnetz, das die Verbindung in andere Datennetze ermöglicht.

In einer alternativen Ausgestaltung der Erfindung wird die Festlegung der wenigstens einen steuernden Funkzelle (SCell) von der steuernden Basisstation durchgeführt wird.

Gemäß einer Weiterbildung der Erfindung wird beim Festlegen der steuernden Basisstation zusätzlich ein jeweiliges Maß einer Auslastung der Basisstationen berücksichtigt. Auf diese Weise wird ermöglicht beispielsweise die hinsichtlich ihres Datendurchsatzes zweitbeste Basisstation als steuernde Basisstation festzulegen, falls ein Maß der Auslastung der besten Basisstation einen beispielsweise vorbestimmten Grenzwert überschreitet, während dies bei der zweitbesten Basisstation nicht der Fall ist.

Ein Maß einer Auslastung einer Basisstation ist beispielsweise eine Anzahl insgesamt versorgter Teilnehmerstationen und/oder der Gesamtdatendurchsatz hinsichtlich aller versorgter Teilnehmerstationen.

Die erfindungsgemäße Vorrichtung zum Festlegen der steuernden Basisstation weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Es ist von Vorteil, wenn die Vorrichtung zum Festlegen der steuernden Basisstation in der Vorrichtung angeordnet ist, welche die Datenpakete von den wenigstens zwei Basisstationen empfängt. In diesem Sinne kann die Vorrichtung als identisch mit der Vorrichtung zum Festlegen betrachtet werden. Die Vorrichtung und die Vorrichtung zum Festlegen werden beispielsweise durch zwei unterschiedliche Programme realisiert, die auf einem Computer ablaufen.

Die Erfindung wird im folgenden anhand von in den Figuren dargestellten Ausführungsbeispielen näher erläutert. Es zeigen:
- Fig. 1: eine schematische Darstellung eines Funkkommunikationssystems in dem ein Ausführungsbeispiel des erfindungsgemäßen Verfahrens durchgeführt wird und
- Fig. 2: eine schematische Darstellung eines beispielhaften zeitlichen Ablaufs des erfindungsgemäßen Verfahrens.

Gleiche Bezugszeichen in den Figuren bezeichnen gleiche Gegenstände.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS- und/oder Email-Versand und/oder zum Internet-Zugang.

Eine Basisstation ist eine netzseitige Funkstation, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Vorrichtungen, beispielsweise über Funknetzkontroller, mit einem Kernnetz verbunden, über das Verbindungen in andere Funkkommunikationssysteme oder in andere Datennetze erfolgen.

Unter einem Datennetz ist beispielsweise das Internet oder ein Festnetz mit beispielsweise leitungsvermittelten Verbindungen für z.B. Sprache und/oder Daten zu verstehen.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

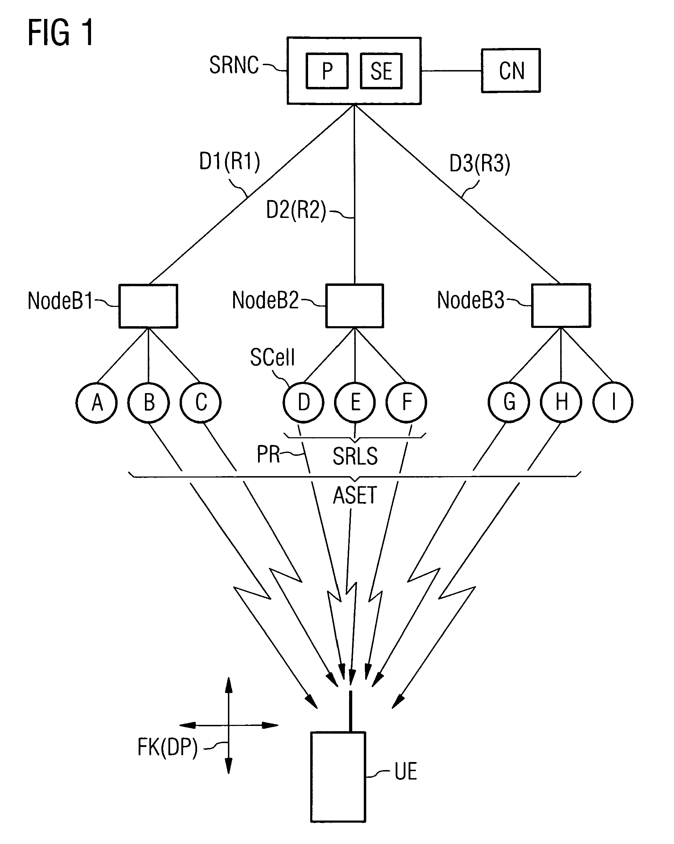

Figur 1 zeigt schematisch ein Funkkommunikationssystem mit einer Teilnehmerstation UE, einer ersten Basisstation NodeB1, einer zweiten Basisstation NodeB2, einer dritten Basisstation NodeB3, einem steuernden Funknetzkontroller SRNC sowie einem Kernnetz CN. Der steuernde Funknetzkontroller SRNC weist eine Sende- und Empfangseinheit SE auf, die zum Senden sowie Empfangen von Datenpaketen an und von Basisstationen sowie an das Kernnetz CN und von dem Kernnetz CN dient. Weiterhin weist der steuernde Funknetzkontroller SRNC eine Steuereinheit P auf, die den Betrieb des steuernden Funknetzkontroller SRNC und somit insbesondere die Sende- und Empfangseinheit SE steuert.

Die erste Basisstation NodeB1 steuert Datenübertragungen in einer ersten, zweiten und dritten Funkzelle A, B, C, die zweite Basisstation NodeB2 steuert Datenübertragungen in einer vierten, fünften und sechsten Funkzelle D, E, F und die dritte Basisstation NodeB3 steuert Datenübertragungen in einer siebten, achten und neunten Funkzelle G, H, I.

Die Teilnehmerstation UE überträgt auf einem Funkkanal FK, beispielsweise auf dem E-DCH gemäß 3GPP TS 25.309v6.0.0 (2004-09), Datenpakete DP in Aufwärtsrichtung, an die empfangende erste, zweite und dritte Basisstation NodeB1, NodeB2, NodeB3. Die Übertragung der Datenpakete DP auf dem Funkkanal FK ist durch die Schreibweise "FK(DP)" dargestellt. Zu einem so genannten "active set" ASET, d.h. den Funkzellen, in denen die auf dem Funkkanal FK gesendeten Datenpakete DP empfangen werden, gehören die zweite und dritte Funkzelle B, C der ersten Basisstation NodeB1, die vierte, fünfte und sechste Funkzelle D, E, F der zweiten Basisstation NodeB2 und die siebte und achte Funkzelle G, H der dritten Basisstation NodeB3.

Für den Funkkanal FK wird beispielsweise eine bestimmte Frequenz und/oder einen bestimmter Spreizcode (engl. spreading code) und/oder eine bestimmte Zeitlage (Zeitschlitz oder Zeitrahmen) verwendet, um den Funkkanal FK von anderen Funkkanälen unterscheiden zu können. Diese Eigenschaften des Funkkanals FK müssen den entsprechenden Basisstationen zum Empfang des Funkkanals FK bekannt sein. In Figur 1 sind diese Eigenschaften allen Funkzellen des "active set" ASET bekannt, so dass in diesen Funkzellen B, C, D , E, F, G, H die Datenpakete DP im wesentlichen zeitgleich empfangen werden. Die Datenpakete DP werden somit sowohl hinsichtlich der drei Basisstationen NodeB1, NodeB2, NodeB3 als auch hinsichtlich der jeweiligen Funkzellen B, C, D , E, F, G, H in einem Empfangsdiversitätsbetrieb, beispielsweise einem Softhandover-Betrieb, empfangen.

Damit die Teilnehmerstation UE auf dem Funkkanal FK die Datenpakete DP übertragen kann, müssen ihr bestimmte Übertragungsparameter PR netzseitig signalisiert werden. Bei den bestimmten Übertragungsparametern handelt es sich beispielsweise um einen Absolutwert der zu verwendenden Sendeleistung und/oder ein Transportformat (TF: Transport Format) oder ein maximales Transportformat oder eine Liste von Transportformaten (TFCS: Transport Format Combination Set) zur Auswahl eines Transportformats durch die Teilnehmerstation. Erst nach Empfang der bestimmten Übertragungsparameter PR kann die Teilnehmerstation UE die Übertragung der Datenpakete DP durchführen.

Die bestimmten Übertragungsparameter PR werden der Teilnehmerstation UE von der zweiten Basisstation NodeB2 signalisiert, die somit als steuernde Basisstation die Scheduling-Funktionalität wahrnimmt. Signalisiert werden die bestimmten Übertragungsparameter PR ausschließlich von der steuernden Basisstation und von dieser vorzugsweise in einer einzigen Funkzelle, nämlich der als einzige steuernde Funkzelle SCell festgelegten vierten Funkzelle D. Die Gesamtheit der Funkzellen der steuernden zweiten Basisstation NodeB2 wird als "Serving RLS" SRLS bezeichnet (RLS: Radio Link Set).

Die Teilnehmerstation UE kann für alle Funkzellen B, C, D , E, F, G, H ihres "active set" ASET ein Maß einer Empfangsqualität bestimmen, indem sie von diesen Funkzellen jeweils beispielsweise Signale auf dem CPICH (Common Pilot Channel) empfängt. Dies ist durch von den Funkzellen B, C, D , E, F, G, H des "active set" ASET auf die Teilnehmerstation UE zeigende Pfeile dargestellt.

Ein Maß einer Empfangsqualität ist beispielsweise ein Signal-zu-Rausch-Verhältnis, ein Signal-zu-Interferenz-Verhältnis, eine Bitfehlerrate, eine Blockfehlerrate, eine Anzahl von Nichtbestätigungsnachrichten pro Sekunde oder ein Pfadverlust.

Die erste, zweite und dritte Basisstation NodeB1, NodeB2, NodeB3 verwenden beispielsweise ein HARQ Protokoll (HARQ: Hybrid Automatic Repeat Request), um den korrekten Empfang der Datenpakete DP zu ermöglichen. Wird ein Datenpaket in einer Funkzelle einer Basisstation korrekt empfangen, d.h. ist dieses Datenpaket durch die Basisstation decodierbar, sendet die Basisstation in dieser Funkzelle ein Bestätigungssignal (ACK: Acknowledge) an die Teilnehmerstation UE. Wird ein Datenpaket nicht korrekt empfangen, sendet die entsprechende Basisstation in der entsprechenden Funkzelle ein Nichtbestätigungssignal (NACK: Not Acknowledge) und signalisiert der Teilnehmerstation UE auf diese Weise, dass sie das entsprechende Datenpaket erneut übertragen soll.

Das HARQ Protokoll der Teilnehmerstation UE ist in diesem Ausführungsbeispiel derart festgelegt, dass die Teilnehmerstation UE nur dann ein Datenpaket erneut schickt, wenn sie in keiner der Funkzellen des "active set" ASET ein Bestätigungssignal empfängt. Empfängt sie wenigstens ein Bestätigungssignal für ein Datenpaket, wurde dieses Datenpaket offensichtlich in der entsprechenden Funkzelle korrekt empfangen und wird daher von der entsprechenden Basisstation an den steuernden Funknetzkontroller SRNC weitergeleitet. Ein erneutes Aussenden dieses Datenpaketes ist somit nicht erforderlich, da es ausreicht, wenn der steuernde Funknetzkontroller SRNC ein Datenpaket einmal erhält. Empfängt die Teilnehmerstation UE hingegen in keiner der Funkzellen des "active set" ASET ein Bestätigungssignal, so sendete sie das entsprechende Datenpaket erneut.

In den Basisstationen NodeB1, NodeB2, NodeB3 werden gleiche Datenpakete, die in mehreren Funkzellen einer Basisstation auf dem Funkkanal FK empfangen werden, kombiniert, so dass auch ein für sich allein nicht decodierbares Datenpaket durch die Kombination mit anderen, gleichen Datenpaketen decodierbar sein kann. Datenpakete tragen beispielsweise eine Datenpaketnummer anhand derer eine Basisstation die empfangenen Datenpakete unterscheiden und somit gleiche Datenpakete erkennen kann. Ergibt auch die Kombination gleicher Datenpakete kein decodierbares Datenpaket, wird ein Nichtbestätigungssignal an die Teilnehmerstation UE gesendet. Das Nichtbestätigungssignal wird in wenigstens einer der Funkzellen gesendet, die ein Datenpaket zu der nicht erfolgreichen Kombination beigesteuert hat.

Die in den Funkzellen B, C, D, E, F, G, H der Basisstationen des "active set" ASET empfangenen Datenpakete und gegebenenfalls durch Kombination gleicher Datenpakete gebildeten Datenpakete werden in den jeweiligen Basisstationen decodiert und an den steuernden Funknetzkontroller SRNC weitergeleitet.

Selbstverständlich können die Basisstationen NodeB1, NodeB2, NodeB3 die empfangenen Datenpakete und die gegebenenfalls durch Kombination gebildeten Datenpakete auch undecodiert an den steuernden Funknetzkontroller SRNC weiterleiten. In diesem Fall ist das HARQ Protokoll im steuernden Funknetzkontroller SRNC lokalisiert und ein Bestätigungssignal wird in wenigstens einer Funkzelle des "active set" ASET an die Teilnehmerstation UE gesendet, falls der steuernde Funknetzkontroller SRNC ein Datenpaket, gegebenenfalls durch Kombination gleicher Datenpakete aller Basisstationen, decodieren kann. Ein Nichtbestätigungssignal wird gesendet, falls auch durch Kombination gleicher Datenpakete aller Basisstationen keine Decodierung möglich ist.

Die erste Basisstation NodeB1 leitet erste Datenpakete D1 mit einer ersten Datenrate R1 weiter. Die zweite Basisstation NodeB2 leitet zweite Datenpakete D2 mit einer zweiten Datenrate R2 weiter. Die dritte Basisstation NodeB3 leitet dritte Datenpakete D3 mit einer dritten Datenrate R3 weiter. Würden alle Basisstationen in allen Funkzellen des "active set" ASET gleich gut, d.h. mit gleicher Empfangsqualität empfangen, wären die ersten, zweiten und dritten Datenpakete D1, D2, D3 sowie die erste, zweite und dritte Datenrate R1, R2, R3 gleich. In dem Ausführungsbeispiel aus Figur 1 hingegen empfängt die zweite Basisstation NodeB2 in der vierten, fünften und sechsten Funkzelle D, E, F in Summe besser als die beiden anderen Basisstationen NodeB1, NodeB3 in der zweiten und dritten Funkzelle B, C bzw. der siebten und achten Funkzelle G, H. In den ersten und dritten Datenpaketen D1, D3 der ersten und dritten Basisstation NodeB1, NodeB3 sind daher Datenpakte nicht enthalten, für die in wenigstens einer der Funkzellen der zweiten Basisstation NodeB2 ein Bestätigungssignal gesendet wurde, während in keiner der Funkzellen der ersten und/oder der dritten Basisstation NodeB1, NodeB3 für diese Datenpakete ein Bestätigungssignal gesendet wurde, d.h. die entsprechenden Datenpakete korrekt empfangen wurden. Die zweite Datenrate R2 mit denen die zweiten Datenpakete D2 an den steuernden Funknetzkontroller SRNC gesendete werden, ist daher größer als die erste Datenrate R1 und die zweite Datenrate R2. Die zweite Basisstation NodeB2 bzw. die durch den Funknetzkontroller SRNC empfangenen zweiten Datenpakete D2 haben somit einen größeren Datendurchsatz als die ersten und dritten Datenpakete D1, D3. Die Steuereinheit P des steuernde Funknetzkontrollers SRNC legt daher die zweite Basisstation NodeB2 als steuernde Basisstation fest.

Selbstverständlich kann die Erfindung auch dann durchgeführt werden, wenn eine außerhalb des steuernden Funknetzkontrollers SRNC angeordnete Vorrichtung zum Festlegen der steuernden Basisstation die erste, zweite und dritte Datenrate R1, R2, R3 kennt und festlegt, dass die zweite Basisstation NodeB2 als steuernde Basisstation zu verwenden ist. Die Festlegung wird dann dem steuernden Funknetzkontrollers SRNC mitgeteilt und von diesem an die zweite Basisstation NodeB2 übermittelt.

Alternativ kann der steuernde Funknetzkontroller SRNC einen Grenzwert für den Datendurchsatz, beispielsweise eine Grenzdatenrate festlegen. Überschreiten mehrere der Basisstationen mit ihrer Datenrate den Grenzwert, wählt der steuernde Funknetzkontroller SRNC eine beliebige dieser Basisstationen als steuernde Basisstation aus.

Selbstverständlich können zwischen den Basisstationen und dem steuernden Funknetzkontroller SRNC weitere Funknetzkontroller angeordnet sein, die jeweils von den Basisstationen empfangene Datenpakete an den steuernden Funknetzkontroller SRNC weiterleiten. Derartige Funknetzkontroller sind beispielsweise im UMTS-Standard als so genannte Drift RNC bekannt.

Ändern sich die Datenraten mit denen die ersten, zweiten, und dritten Datenpakte D1, D2, D3 an den steuernden Funknetzkontroller weitergeleitet werden, beispielsweise, weil sich die Übertragungsbedingungen der Funkzellen des "active set" ASET oder die an dem "active set" ASET beteiligten Funkzellen geändert haben, ist es besonders günstig, dass der steuernde Funknetzkontroller SRNC weiterhin die Datenraten vergleicht und diejenige Basisstation als steuernde Basisstation festlegt, die ihm Datenpakete mit der höchsten Datenrate weiterleitet.

Eine jeweilige Datenrate für von Basisstationen empfangene Datenpakete, d.h. ein Maß des jeweiligen Datendurchsatzes, kann der steuernde Funknetzkontroller SRNC beispielsweise dadurch bestimmen, dass er Datenpakete der Basisstationen z.B. anhand einer jeweiligen Basisstationskennung oder anhand eines die Basisstation kennzeichnenden Übertragungsweges (z.B. ein basisstationsspezifischer Port) identifiziert und für die Basisstationen - regelmäßig oder während eines vorgegebenen Messzeitraumes - die jeweilige Anzahl pro Sekunde eintreffender Datenpakete ermittelt. Alternativ oder zusätzlich kann der steuernde Funknetzkontroller SRNC auch zu einem Zeitpunkt eine Sortier-Warteschlange (engl.: reordering queue) auswerten, indem er die dort zu diesem Zeitpunkt mit einer Kennung der jeweiligen Basisstation gespeicherten Datenpakete der Basisstationen auszählt und den Zahlenwert als jeweiliges Maß der Basisstation für den Datendurchsatz verwendet. Als steuernde Basisstation wird in diesem Fall beispielsweise diejenige Basisstation festgelegt, die zum Zeitpunkt des Auszählens die größte Anzahl an Datenpakten in der Sortier-Warteschlage aufweist.

Nachdem der steuernde Funknetzkontroller SRNC gemäß Figur 1 die zweite Basisstation NodeB2 als steuernde Basisstation festgelegt hat, legt er die vierte Funkzelle D als steuernde Funkzelle SCell fest. Hierzu wird die Teilnehmerstation UE zuvor angewiesen, ausschließlich für die Funkzellen der zweiten Basisstation NodeB2 ein Maß der Empfangsqualität zu bestimmen und an den steuernden Funknetzkontroller SRNC zu signalisieren.

Die vierte Funkzelle D bietet der Teilnehmerstation UE eine bessere Empfangsqualität als die fünfte und sechste Funkzelle E, F und wird daher vom steuernden Funknetzkontroller SRNC als steuernde Funkzelle SCell festgelegt. Alternativ kann die zweite Basisstation NodeB2 für Übertragungen der Teilnehmerstation UE die Empfangsqualität in Aufwärtsrichtung in den entsprechenden Funkzellen bestimmen und der steuernde Funknetzkontroller SRNC legt dann diejenige Funkzelle als steuernde Funkzelle fest, die in Aufwärtsrichtung die beste Empfangsqualität aufweist. Weiterhin ist alternativ vorgesehen, dass die zweite Basisstation NodeB2 als steuernde Basisstation selbst die steuernde Funkzelle gemäß zuvor beschriebener Auswahlkriterien festlegt.

Während die Steuerung der Übertragung der Teilnehmerstation durch die bestimmten Übertragungsparameter ausschließlich durch die steuernde Basisstation und ihre steuernde Funkzelle erfolgt, können zur weiteren Steuerung der Übertragung der Datenpakte DP in Aufwärtsrichtung in allen Funkzellen des "active set" ASET TPC-Bits (TPC: Transmit Power Control) an die Teilnehmerstation UE gesendet werden. Dabei gibt es für TPC-Bits in den Funkzellen der steuernden Basisstation, d.h. im "serving RLS" SRLS drei verschiedene TPC-Bits:
- ein erstes TPC-Bit (up) signalisiert der Teilnehmerstation, dass die Sendeleistung um einen beispielsweise vordefinierten Wert zu erhöhen ist,
- ein zweites TPC-Bit (hold) signalisiert, dass die Sendeleistung unverändert weiter zu verwenden ist
- und ein drittes TPC-Bit (down) signalisiert, dass die Sendeleistung um einen beispielsweise vordefinierten Wert zu erniedrigen ist.

Alternativ oder zusätzlich kann die Sendeleistung beim Empfang des ersten TPC-Bits bzw. des dritten TPC-Bits auch solange erhöht bzw. erniedrigt werden, bis die Teilnehmerstation UE ein zweites TPC-Bit (hold) empfängt. In Funkzellen des "active set" ASET, die nicht zum "serving RLS" SRLS gehören, können, beispielsweise um durch Sendeleistungserhöhungen auftretende Interferenzen zu reduzieren, nur das zweite TPC-Bit (hold) und das dritte TPC-Bit (down) verwendet werden.

Durch die erfindungsgemäße Auswahl der steuernden Basisstation in Abhängigkeit von einem Maß ihres Datendurchsatzes wird, unterstützt durch die oben beschriebene Steuerung der Sendeleistung mittels dreier TPC-Bits, erreicht, dass die durch die Teilnehmerstation UE verwendete Sendeleistung möglichst geringe Interferenzen insbesondere in den Funkzellen erzeugt, die nicht zum "serving RLS" SRLS gehören, während gleichzeitig ein möglichst großer Datendurchsatz in Aufwärtsrichtung erzielt wird.

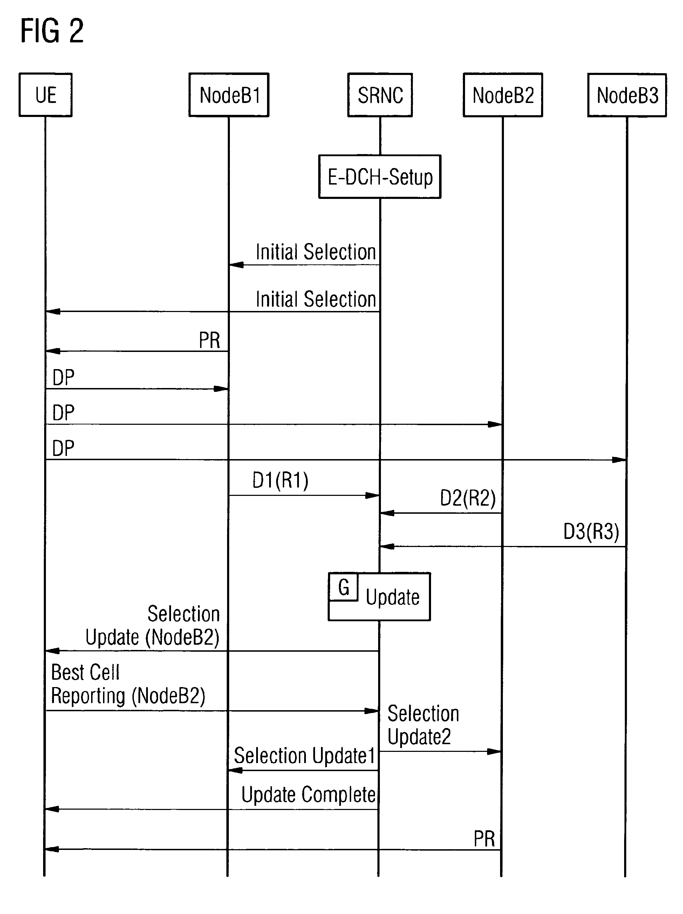

Figur 2 zeigt schematisch einen Ablauf einer erfindungsgemäßen Festlegung einer steuernden Basisstation sowie einer steuernden Funkzelle für das in Figur 1 dargestellte Funkkommunikationssystem.

Der steuernde Funknetzkontroller SRNC konfiguriert einen erweiterten dedizierten Kanal, beispielsweise einen E-DCH für die Teilnehmerstation UE. Dies ist durch den Kasten *E-DCH-*Setup dargestellt. Die Konfiguration des E-DCH betrifft z.B. die Festlegung einer für den E-DCH zu verwendenden Frequenz sowie eines zu verwendenden Spreizcodes. Diese Konfigurationsparameter werden der Teilnehmerstation UE beispielsweise in einem nicht dargestellten Signalisierungskanal in der zweiten Funkzelle B der ersten Basisstation NodeB1 signalisiert, da die Teilnehmerstation UE bereits vor dem Einrichten des E-DCH eine Verbindung über den Signalisierungskanal mit der ersten Basisstation NodeB1 hat.

Der steuernde Funknetzkontroller SRNC legt beim Einrichten des E-DCH eine der Basisstationen mit Funkzellen im "active set" ASET der Teilnehmerstation UE als steuernde Basisstation fest. In diesem Ausführungsbeispiel wird beim Einrichten des E-DCH die erste Basisstation NodeB1 als steuernde Basisstation festgelegt, beispielsweise, weil die Teilnehmerstation UE dort bereist eine Verbindung unterhält. Die Festlegung wird der ersten Basisstation NodeB1 sowie der Teilnehmerstation UE durch eine Initialisierungsnachricht *Initial Selection* signalisiert. In der Initialisierungsnachricht *Initial Selection* ist weiterhin eine Information enthalten, der die erste Basisstation NodeB1 und die Teilnehmerstation UE jeweils entnehmen können, dass die zweite Funkzelle B als steuernde Funkzelle festgelegt wurde. Über die zweite Funkzelle B der ersten Basisstation NodeB1 empfängt die Teilnehmerstation UE daher nachfolgend die bestimmten Übertragungsparameter PR und beginnt die Übertragung ihrer Datenpakete DP auf dem E-DCH. Die Datenpakete DP werden von allen drei Basisstationen NodeB1, NodeB2, NodeB3 empfangen. Die Basisstationen NodeB1, NodeB2, NodeB3 leiten daraufhin, wie bereits zu Figur 1 beschrieben, die ersten, zweiten und dritten Datenpakete D1, D2, D3 mit der ersten, zweiten und dritten Datenrate R1, R2, R3 an den steuernden Funknetzkontroller SRNC weiter.

Der steuernde Funknetzkontroller SRNC ermittelt die jeweiligen Datenraten R1, R2, R3 mit denen er die ersten, zweiten und dritten Datenpakete D1, D2, D3 empfängt und stellt fest, dass nur die zweite und dritte Datenrate R2, R3 größer sind als ein Grenzwert G, so dass nur die zweite und die dritte Basisstation als steuernde Basisstation in Frage kommen. Weiterhin stellt der steuernde Funknetzkontroller SRNC fest, dass die zweite Datenrate R2 der zweiten Datenpakete D2 geringer ist als die dritte Datenrate R3 der dritten Datenpakete D3. Allerdings ist die Auslastung der dritten Basisstation NodeB3, die außer der Teilnehmerstation UE noch weitere Teilnehmerstationen versorgt und dadurch einen hohen Gesamtdatendurchsatz hat, größer als ein vorbestimmter Grenzwert der Auslastung von beispielsweise 100 Teilnehmerstationen und einem Gesamtdatendurchsatz von 10000 Datenpaketen pro Sekunde. Die Auslastung der zweiten Basisstation NodeB2 hingegen liegt beispielsweise bei 50 Teilnehmerstationen und einem Gesamtdatendurchsatz von 8000 Datenpaketen pro Sekunde und ist somit geringer als der vorbestimmte Grenzwert der Auslastung und der steuernde Funknetzkontroller SRNC entscheidet daher die steuernde Basisstation von der ersten Basisstation NodeB1 in die zweite Basisstation NodeB2 zu verlagern, obwohl die zweite Datenrate R2 geringer ist als die dritte Datenrate R3. Dies ist durch den Kasten *Update* dargestellt.

Der steuernde Funknetzkontroller SRNC sendet eine Änderungsnachricht *Selection Update (NodeB2)* an die Teilnehmerstation UE, mit der die Änderung der steuernden Basisstation angekündigt wird und fordert gleichzeitig die Teilnehmerstation UE auf, in der vierten, fünften und sechsten Funkzelle D, E, F der als steuernde Basisstation vorgesehenen zweiten Basisstation NodeB2 jeweils ein Maß für eine Empfangsqualität zu ermitteln und ihm die Beste der Funkzellen zu signalisieren.

Die Teilnehmerstation UE signalisiert nachfolgend mit einer Nachricht *Best Cell Reporting (NodeB2)* dem steuernden Funknetzkontroller SRNC die vierte Funkzelle D als Funkzelle mit der besten Empfangsqualität.

Alternativ kann auch das jeweilige Maß der Empfangsqualität aller Funkzellen oder derjenigen Funkzellen, deren Maß der Empfangsqualität einen bestimmten Grenzwert überschreitet, signalisiert werden. Der steuernde Funknetzkontroller SRNC trifft dann selbst eine Auswahl, welche der Funkzellen die Beste ist.

Nachfolgend teilt der steuernde Funknetzkontroller SRNC der ersten Basisstation NodeB1 mit einer Nachricht *Selection Upddate1* mit, dass sie mit Erhalt dieser Nachricht nicht mehr als steuernde Basisstation festgelegt ist. Weiterhin wird die zweite Basisstation NodeB2 mit einer Nachricht *Selection Update2* informiert, dass sie jetzt als steuernde Basisstation festgelegt ist und dass die vierte Funkzelle D als steuernde Funkzelle festgelegt wurde. Über die Gültigkeit der neuen Festlegung der steuernden Basisstation wird selbstverständlich auch die Teilnehmerstation UE mit einer Nachricht *Update Complete* informiert.

Nachfolgend überträgt die Teilnehmerstation UE wir zuvor ihre Datenpakete DP an die drei Basisstationen NodeB1, NodeB2, NodeB3, die weiterhin die ersten, zweiten und dritten Datenpakete D1, D2, D3 an den steuernden Funknetzkontroller SRNC weiterleiten. Die bestimmten Übertragungsparameter PR empfängt die Teilnehmerstation UE nun, wie auch in Figur 1 dargestellt, in der vierten Funkzelle D der zweiten Basisstation NodeB2. Bevor die Teilnehmerstation UE die bestimmten Übertragungsparameter PR erstmalig von der zweiten Basisstation NodeB2 erhält, kann sie selbstverständlich die Übertragung der Datenpakete DP unter Verwendung der zuvor von der ersten Basisstation NodeB1 empfangenen Werte der bestimmten Übertragungsparameter PR durchführen. Auf diese Weise kann eine kontinuierliche Übertragung der Datenpakete DP erreicht werden.

Die in Figur 2 mit durchgehenden Pfeilen zwischen der Teilnehmerstation UE und dem steuernden Funknetzkontroller dargestellten Nachrichten *Initial Selection, Selection Update (NodeB2), Best Cell Reporting (NodeB2) und Update Complete* werden beispielsweise als Layer 3 Nachrichten über die steuernde Funkzelle und somit über die jeweilige steuernde Basisstation transparent an die Teilnehmerstation UE gesendet bzw. an den steuernden Funknetzkontroller SRNC gesendet. Selbstverständlich können diese Nachrichten auch als Layer 2 Nachrichten, d.h. inband beispielsweise im MAC Header (MAC: Media Access Control) eines Datenpaketes gesendet und von der jeweils aktuellen steuernden Basisstation ausgelesen und weitergeleitet werden.

Selbstverständlich kann das zuvor anhand von Figur 2 beschriebene Verfahren auch dann entsprechend durchgeführt werden, wenn beim Einrichten (Initialisierung mittels Nachricht *Initial Selection)* des E-DCH die zweite oder die dritte Basisstation NodeB2, NodeB3 als steuernde Basisstation festgelegt wird.

## Patentansprüche

1. Verfahren zum Festlegen einer steuernden Basisstation für eine Übertragung in Aufwärtsrichtung von Datenpaketen (DP) einer Teilnehmerstation (UE) eines Funkkommunikationssystems,
- in dem eine Vorrichtung (SRNC) von wenigstens zwei Basisstationen (NodeB1, NodeB2, NodeB3) Datenpakete (D1, D2, D3) empfängt, welche die wenigstens zwei Basisstationen (NodeB1, NodeB2, NodeB3) von der Teilnehmerstation (UE) in jeweils wenigstens zwei Funkzellen (B, C, D, E, F, G, H) in einem Empfangsdiversitätsbetrieb empfangen haben,
- und in dem bestimmte Übertragungsparameter (PR) für die Übertragung in Aufwärtsrichtung von Datenpaketen (DP) nur von der steuernden Basisstation der Teilnehmerstation (UE) signalisiert werden,
**dadurch gekennzeichnet,**
**dass** eine der Basisstationen (NodeB2) als steuernde Basisstation in Abhängigkeit von einem Maß eines Datendurchsatzes (R2) der durch die Vorrichtung (SRNC) von der entsprechenden Basisstation (NodeB2) empfangenen Datenpakete (D2) festgelegt wird.

2. Verfahren nach Anspruch 1,
**dadurch gekennzeichnet,**
**dass** als steuernde Basisstation eine der Basisstationen (NodeB2) festgelegt wird, deren Maß des Datendurchsatzes (R2) einen vorbestimmten Grenzwert überschreitet.

3. Verfahren nach einem der vorstehenden Ansprüche,
**dadurch gekennzeichnet,**
**dass** diejenige der Basisstationen (NodeB2) als steuernde Basisstation festgelegt wird, deren Maß des Datendurchsatzes (R2) den größten Wert aufweist.

4. Verfahren nach einem der vorstehenden Ansprüche,
**dadurch gekennzeichnet,**
**dass** als Maß des Datendurchsatzes eine Datenrate (R2) der von der Vorrichtung (SRNC) von der entsprechenden Basisstation (NodeB2) empfangenen Datenpakete (D2) verwendet wird.

5. Verfahren nach einem der vorstehenden Ansprüche,
**dadurch gekennzeichnet,**
**dass** wenigstens eine der Funkzellen (D) der steuernden Basisstation (NodeB2) als steuernde Funkzelle (SCell) festgelegt wird, wobei die bestimmten Übertragungsparameter (PR) der Teilnehmerstation (UE) ausschließlich in der wenigstens einen steuernden Funkzelle signalisiert werden.

6. Verfahren nach Anspruch 5,
**dadurch gekennzeichnet,**
**dass** die wenigstens eine steuernde Funkzelle (SCell) in Abhängigkeit eines Maßes einer funkzellenspezifischen Empfangsqualität der Teilnehmerstation (UE) und/oder der steuernden Basisstation (NodeB2) festgelegt wird.

7. Verfahren nach einem der vorstehenden Ansprüche,
**dadurch gekennzeichnet,**
**dass** die Festlegung der steuernden Basisstation (NodeB2) und/oder der wenigstens einen steuernden Funkzelle (SCell) von der Vorrichtung (SRNC) durchgeführt wird.

8. Verfahren nach einem der vorstehenden Ansprüche,
**dadurch gekennzeichnet,**
**dass** als Vorrichtung ein Funknetzkontroller (SRNC) verwendet wird.

9. Verfahren nach einem der Ansprüche 1 - 7,
**dadurch gekennzeichnet,**
**dass** die Festlegung der wenigstens einen steuernden Funkzelle (SCell) von der steuernden Basisstation (NodeB2) durchgeführt wird.

10. Verfahren nach einem der vorstehenden Ansprüche,
**dadurch gekennzeichnet,**
**dass** beim Festlegen der steuernden Basisstation (NodeB2) zusätzlich ein jeweiliges Maß einer Auslastung der Basisstationen (NodeB2, NodeB3) berücksichtigt wird.

11. Vorrichtung (SRNC) zum Festlegen einer steuernden Basisstation für eine Übertragung in Aufwärtsrichtung von Datenpaketen (DP) einer Teilnehmerstation (UE) eines Funkkommunikationssystems, wobei das Funkkommunikationssystem eine Vorrichtung (SRNC) zum Empfangen von Datenpaketen (D1, D2, D3) von wenigstens zwei Basisstationen (NodeB1, NodeB2, NodeB3) aufweist, wobei die wenigstens zwei Basisstationen (NodeB1, NodeB2, NodeB3) die Datenpakete (DP) von der Teilnehmerstation (UE) in jeweils wenigstens zwei Funkzellen (B, C, D, E, F, G, H) in einem Empfangsdiversitätsbetrieb empfangen haben und wobei bestimmte Übertragungsparameter (PR) für die Übertragung in Aufwärtsrichtung von Datenpaketen (DP) nur von der steuernden Basisstation der Teilnehmerstation (UE) signalisiert werden,
**gekennzeichnet durch**,
Mittel (P) zum Festlegen der steuernden Basisstation derart, dass die Mittel (P) zum Festlegen eine der Basisstationen (NodeB2) als steuernde Basisstation in Abhängigkeit von einem Maß eines Datendurchsatzes (R2) der **durch** die Vorrichtung (SRNC) von der entsprechenden Basisstation empfangenen Datenpakete (D2) festlegen.
